Europäisches Patentamt

European Patent Office

Office européen des brevets

(19)

(11) Numéro de publication: **0 084 280**

**A1**

(12)

# DEMANDE DE BREVET EUROPEEN

(21) Numéro de dépôt: **82402188.5**

(22) Date de dépôt: **30.11.82**

(51) Int. Cl.³: **F 16 B 37/04**
**F 16 B 37/12**

(30) Priorité: **11.12.81 FR 8123242**

(43) Date de publication de la demande:
**27.07.83 Bulletin 83/30**

(84) Etats contractants désignés:
**AT BE CH DE GB IT LI LU NL SE**

(71) Demandeur: **RAPID S.A.**
**251 Boulevard Péreire**
**F-75852 Paris Cedex 17(FR)**

(72) Inventeur: **Dubost, Dominique, Michel Louis**
**53 Résidence Elysée II**
**F-78170 La Celle Saint Cloud(FR)**

(74) Mandataire: **Durand, Yves Armand Louis et al,**
**Cabinet Z. Weinstein 20, Avenue de Friedland**
**F-75008 Paris(FR)**

(54) **Dispositif de fixation emboîtable par pincement sur le bord d'un panneau, et assemblage de panneaux réalisé à l'aide de ce dispositif.**

(57) La présente invention concerne un dispositif de fixation emboîtable par pincement sur le bord d'un panneau.

Ce dispositif (1) est entièrement réalisé en un matériau filiforme et comprend un enroulement hélicoïdal (2) formant taraudage dans lequel peut être vissé une vis (4), lequel enroulement se prolonge par une partie (5) repliée en épingle à cheveux qui se termine par une partie recourbée (6) au niveau de l'enroulement (2), la partie (5) étant située dans un plan parallèle à l'axe (X-X') de l'enroulement (2).

Le dispositif de l'invention s'applique par exemple à la fixation de panneaux ou tôles (7, 8).

FIG.2

EP 0 084 280 A1

Dispositif de fixation emboîtable par pincement sur
le bord d'un panneau, et assemblage de panneaux réalisé à l'aide de ce dispositif"

La présente invention a essentiellement pour objet un
dispositif de fixation  emboîtable par pincement sur
le bord d'un panneau et qui permet la fixation sur ce
panneau d'une pièce quelconque, telle que par exemple
un autre panneau ou une tôle.

On connaît déjà des dispositifs de fixation se présentant sous la forme d'attaches et répondant à la définition générale ci-dessus. Ces attaches étaient généralement réalisées à partir d'une languette métallique ou
en plastique repliée en U et présentant par conséquent
deux branches planes aptes à pincer le bord d'un panneau.
L'une de ces branches comportait un orifice laissant le
passage à un élément fileté,tandis que l'autre branche
constituait un écrou dans lequel est vissé l'élément
fileté qui peut être une vis par exemple.

Cependant de telles attaches demeuraient coûteuses ne
serait-ce que par la quantité de matière nécessaire
pour les fabriquer, et en outre elles ne procuraient
pas la maîtrise du couple de freinage par le fait qu'on
ne pouvait pas faire varier le pas du filetage de l'écrou
sur l'une des branches de l'attache.

La présente invention a pour but de remédier notamment
aux inconvénients ci-dessus en proposant un nouveau dispositif de fixation qui est d'un faible coût, permet la
maîtrise du couple de freinage et a des performances
nettement améliorées par rapport aux attaches classiques à branches planes.

A cet effet, l'invention a pour objet un dispositif de fixation emboîtable par pincement sur le bord d'un panneau, tel que par exemple tôle, caractérisé en ce qu'il est entièrement réalisé en un matériau filiforme et comprend un enroulement hélicoïdal formant taraudage dans lequel peut être vissé un élément fileté, lequel enroulement se prolonge par une partie repliée en épingle à cheveux, qui se termine par une partie recourbée au niveau de l'enroulement hélicoïdal précité.

On comprend déjà que la réalisation d'une telle attache à partir d'un simple fil métallique par exemple, permet d'obtenir un couple de freinage adéquat par le fait qu'on peut faire varier facilement le pas de l'enroulement hélicoïdal formant écrou en fonction du pas de l'élément fileté utilisé.

Suivant un mode de réalisation préféré, le matériau filiforme précité présente une section transversale circulaire.

Selon une autre caractéristique de l'invention, au moins certaines spires de l'enroulement hélicoïdal précité sont aplaties.

L'invention vise également un assemblage de panneaux ou tôles réalisé à l'aide d'un ou plusieurs dispositifs de fixation répondant aux caractéristiques sus-mentionnées.

D'autres avantages et caractéristiques de l'invention apparaîtront mieux dans la description détaillée qui suit et se réfère aux dessins annexés, donnés uniquement à titre d'exemple, et dans lesquels :

La figure 1 est une vue en perspective montrant un dis-

3

positif de fixation conforme aux principes de l'invention, et

La figure 2 est une vue en élévation et coupe partielle de deux panneaux assemblés à l'aide de ce dispositif.

Selon un exemple de réalisation, et en se reportant aux dessins annexés, un dispositif de fixation 1 selon l'invention est réalisé en une seule pièce à partir d'un matériau filiforme qui peut être par exemple un simple fil métallique de section circulaire.

Il se compose essentiellement de trois parties, et à savoir :

- un enroulement hélicoïdal 2, constitué d'un certain nombre de spires 3 et dans lequel on peut visser un élément fileté, tel qu'une vis 4.

- une partie 5 repliée en épingle à cheveux, comme on le voit bien sur les figures, et qui prolonge l'enroulement hélicoïdal 2. Plus précisément cette partie 5 est constituée par une première branche 5a sensiblement rectiligne et prolongeant la dernière spire 3a de l'enroulement 3, et par une deuxième branche 5b repliée sur la branche 5a et raccordée à celle-ci par une partie 5c.

- et une partie d'extrémité 6 formant boucle ouverte et recourbée au niveau de l'enroulement hélicoïdal 2, comme on le voit bien sur les figures.

Suivant un mode de réalisation préféré, au moins certaines spires de l'enroulement 2 peuvent être aplaties de façon à présenter une section transversale sensiblement carrée ou rectangulaire, comme on l'a montré en 9. Ceci peut être de nature à faciliter le vissage et le serrage en fonction évidemment de la nature du filetage de la vis 4.

4

Le dispositif 1 qui vient d'être décrit est de préférence réalisé à partir d'un fil métallique, mais on pourrait tout aussi bien imaginer une autre matière, sans sortir du cadre de l'invention, et cela en fonction des assemblages à réaliser. On décrira brièvement ci-après le montage du dispositif de l'invention ainsi que la manière dont s'effectue l'assemblage de deux tôles 7 et 8 par exemple à l'aide de ce dispositif.

En premier lieu, on emboîte par pincement l'attache 1 sur le bord d'une tôle 7 de façon que la branche 5b et la dernière spire 3a de l'enroulement hélicoïdal prennent respectivement appui sur les deux faces de ladite tôle. La tôle 7 comporte un orifice 7a, de même que la tôle 8 à fixer sur la tôle 7 présente elle aussi un orifice 8a permettant l'insertion de la vis 4.

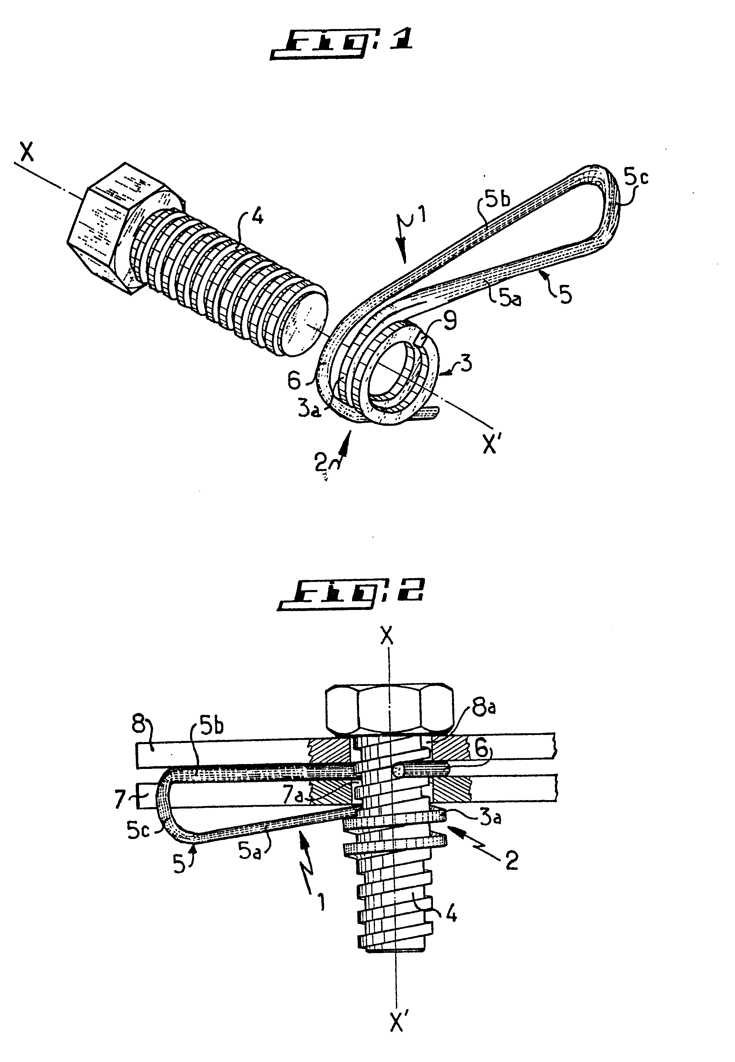

L'enroulement hélicoïdal 2 et par conséquent l'extrémité en boucle 6 étant alignés avec les orifices 7a et 8a des tôles 7 et 8, il suffit d'introduire la vis 4 dans l'orifice 8a, puis de la visser dans les spires de l'enroulement 2 pour finalement obtenir l'assemblage de tôles montré sur la figure 2.

Comme on le comprend, on peut faire varier facilement le pas de l'enroulement 2 en fonction du pas de la vis à laquelle on a à faire. De même, on peut choisir une forme en section transversale appropriée pour les spires de cet enroulement, sans que cela pose de problèmes particuliers compte tenu de la simplicité du dispositif 1.

En outre, on remarquera que les branches 5a et 5b de l'attache 5 sont situées dans un plan sensiblement parallèle à l'axe X-X' de l'enroulement 2 et de la vis 4 une fois montée. Ceci facilite la préhension de l'attache 1 pour l'emboîter par pincement sur le bord du panneau 7 et en outre, la partie en épingle à cheveux 5

5

permettra avantageusement, par sa portion 5c, le blocage en rotation de l'attache contre le bord du panneau 7, puisque ladite attache sera nécessairement entraînée en rotation sous l'effet du vissage de la vis 4 dans l'enroulement 2. Autrement dit, dès le début du vissage, l'attache 1 sera entraînée quelque peu en rotation avec la vis, mais elle se bloquera contre le panneau 7 par sa partie 5c, comme on le voit sur la figure 2, de sorte qu'à ce moment là le vissage pourra s'effectuer normalement.

On a donc réalisé suivant l'invention un nouveau dispositif de fixation à écrou qui est d'une conception mécanique particulièrement simple et peu coûteuse, et qui en outre présente toute la flexibilité requise permettant avantageusement l'écrasement du fil constituant l'attache et par conséquent un excellent serrage permettant d'obtenir des assemblages très rigides.

Revendications

1. Dispositif de fixation emboîtable par pincement sur le bord d'un panneau, tel que par exemple une tôle, caractérisé en ce qu'il est entièrement réalisé en un matériau filiforme et comprend un enroulement hélicoïdal (2) formant taraudage dans lequel peut être vissé un élément fileté(4), lequel enroulement (2) se prolonge par une partie repliée en épingle à cheveux qui se termine par une partie (6) recourbée au niveau de l'enroulement hélicoïdal précité (2).

2. Dispositif selon la revendication 1, caractérisé en ce que la partie (5) en épingle à cheveux est située dans un plan sensiblement parallèle à l'axe(X-X') de l'enroulement hélicoïdal (2).

3. Dispositif selon la revendication 1 ou 2, caractérisé en ce que le matériau filiforme précité présente une section transversale circulaire.

4. Dispositif selon la revendication 1 ou 2, caractérisé en ce qu'au moins certaines spires (3) de l'enroulement hélicoïdal précité sont aplaties.

5. Dispositif selon l'une des revendications 1 à 4, caractérisé en ce qu'il est réalisé à partir d'un fil métallique.

6. Assemblage de panneaux ou tôles réalisé à l'aide d'un ou plusieurs dispositifs de fixation selon l'une des revendications précédentes.

**FIG. 1**

**FIG. 2**

# 0084280

RAPPORT DE RECHERCHE EUROPEENNE

Office européen
des brevets

Numéro de la demande

EP 82 40 2188

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A- 527 340 (TENNANT) | | F 16 B 37/04 |
| | | | F 16 B 37/12 |
| | --- | | |
| A | DE-C- 347 859 (KNÜPFFER) | | |
| | --- | | |
| A | FR-A- 915 237 (AIRCRAFT) | | |
| | ----- | | |

**DOMAINES TECHNIQUES RECHERCHES (Int. Cl. ³)**

F 16 B

Le présent rapport de recherche a été établi pour toutes les revendications

| Lieu de la recherche | Date d'achèvement de la recherche | Examinateur |
|---|---|---|
| LA HAYE | 13-04-1983 | VAN DER WAL W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82